# EUROPÄISCHE PATENTANMELDUNG

(11) **EP 2 815 829 A1**
(43) Veröffentlichungstag der Anmeldung: **24.12.2014**
(21) Anmeldenummer: 14165446.7
(22) Anmeldetag: 22.04.2014
(51) Int. Cl.: B23B 31/12

(54) **Bohrvorrichtung**

(30) Priorität: 21.06.2013 DE 102013106523
(71) Anmelder: Röhm GmbH, 89567 Sontheim (DE)
(72) Erfinder: Schenk, Peter, 89168 Niederstotzingen (DE)
(74) Vertreter: Hentrich, Swen

(57) **Zusammenfassung**

Die Erfindung betrifft eine Bohrvorrichtung, bestehend aus einer ein Maschinengehäuse (11), eine Bohrspindel (4) und einen mit der Bohrspindel (4) gekoppelten Antrieb (5) aufweisenden Bohrmaschine (6) sowie aus einem Bohrfutter (3), dem ein Spannbacken (10) führender Backenhalter (7) sowie ein mit der Bohrspindel (4) verbundener und über eine Gewindeverbindung (8) mit einem die Spannbacken (10) verstellenden Mitnehmer (9) verbundener Futterkörper (2) zugeordnet ist. Es ist eine permanent drehfest mit dem Backenhalter (7) des Bohrfutters (3) verbundene Stellhülse (13) vorgesehen, die zwischen einer die Verstellung der Spannbacken (10) ermöglichenden Spannkonfiguration, in der die Stellhülse (13) drehfest mit dem Maschinengehäuse (11) verbunden ist, und einer Bohrkonfiguration axial verstellbar ist, in der die Bohrspindel (4) drehfest mit dem Backenhalter (7) gekoppelt ist.

## Beschreibung

Die Erfindung betrifft eine Bohrvorrichtung, bestehend aus einer ein Maschinengehäuse, eine Bohrspindel und einen mit der Bohrspindel gekoppelten Antrieb aufweisenden Bohrmaschine sowie aus einem Bohrfutter, dem ein spannbackenführender Backenhalter sowie ein mit der Bohrspindel verbundener und über eine Gewindeverbindung mit einem die Spannbacken verstellenden Mitnehmer verbundener Futterkörper zugeordnet ist.

Derartige Bohrvorrichtungen sind aus dem Stand der Technik bereits seit langem bekannt und haben sich bewährt. So zeigt beispielsweise die DE 39 20 075 C1 ein Bohrfutter, bei dem durch eine Relativdrehung zwischen der Spannhülse und dem Futterkörper die Spannbacken geöffnet oder geschlossen werden können. Jedoch muss zum Öffnen und Schließen der Spannbacken die Spannhülse vom Benutzer ergriffen und manuell verstellt werden. Dies hat sich als nachteilig erwiesen, da zeitgleich das zu spannende Bohrwerkzeug und eben auch die Stellhülse manuell gegriffen werden muss.

Der vorliegenden Erfindung liegt daher die Aufgabe zugrunde, die oben genannten Nachteile zu reduzieren und eine Bohrvorrichtung bereitzustellen, die einen hohen Komfort für den Benutzer aufweist.

Diese Aufgabe wird nach der Erfindung bei einer Bohrvorrichtung der eingangs genannten Art dadurch gelöst, dass eine permanent drehfest mit dem Backenhalter des Bohrfutters verbundene Stellhülse vorgesehen ist, die zwischen einer die Verstellung der Spannbacken ermöglichenden Spannkonfiguration, in der die Stellhülse drehfest mit dem Maschinengehäuse verbunden ist, und einer Bohrkonfiguration axial verstellbar ist, in der die Bohrspindel drehfest mit dem Backenhalter gekoppelt ist.

Somit kann durch eine einfache Verstellung der Stellhülse zwischen der Spannkonfiguration und der Bohrkonfiguration geschaltet werden. Wird nun in der Spannkonfiguration der Antrieb der Bohrmaschine betätigt, so kommt es aufgrund des über die Stellhülse drehfest mit dem Maschinengehäuse verbundenen Backenhalters zu einer Relativdrehung zwischen der Bohrspindel und dem Backenhalter und damit zu einem - abhängig von der Laufrichtung des Antriebes - Öffnen oder Schließen der Spannbacken. Der Benutzer der erfindungsgemäßen Bohrvorrichtung muss also lediglich das zu spannende Bohrwerkzeug festhalten und den Antrieb der Bohrmaschine betätigen. In der Bohrfiguration ist die Bohrspindel drehfest mit dem Backenhalter gekoppelt, wodurch ein unbeabsichtigtes Öffnen der Spannbacken unterbunden ist. Im Rahmen der Erfindung ist es dabei vorgesehen, dass die Koppelung zwischen der Bohrspindel und dem Backenhalter mittelbar oder unmittelbar über die Stellhülse erfolgt.

Als besonders vorteilhaft hat es sich erwiesen, wenn an der dem Antrieb zuweisenden Stirnseite des Backenhalters mindestens eine Ausnehmung ausgeformt ist zur konfigurationsunabhängigen Bildung eines Formschlusses mit mindestens einer stirnseitig an der Stellhülse ausgebildeten, in Form und Anzahl mit der mindestens einen Ausnehmung korrespondierenden Nocke. Hierdurch kann auf einfache und effektive Art und Weise die permanente drehfeste Koppelung der Stellhülse mit dem Backenhalter des Bohrfutters erreicht werden. Die axiale Verstellbarkeit der Stellhülse erfolgt dabei lediglich in einem Bereich, so dass die Nocken stets im Eingriff mit den Ausnehmungen verbleiben, um den Formschluss zwischen dem Backenhalter und der Stellhülse aufrecht zu erhalten. Hierbei hat es sich auch als günstig gezeigt, wenn Anlageflächen, die die mindestens eine an der Stellhülse ausgebildete Nocke seitlich begrenzen, nicht parallel zueinander orientiert sind. Insbesondere bei zentrisch orientierten Anlageflächen wird die Drehmomentübertragung zwischen der Stellhülse und dem Backenhalter optimiert.

Als vorteilhaft hat es sich auch gezeigt, wenn der Bohrspindel außenumfangsseitig eine Sperrverzahnung zugeordnet ist zur Bildung eines Formschlusses mit einer der Stellhülse innenumfangsseitig zugeordneten Verzahnung in der Bohrkonfiguration. Da eine derartige Sperrverzahnung einfach hergestellt werden kann, wirkt sich dies positiv auf die Herstellungskosten der Bohrspindel und damit auf die Herstellungskosten des gesamten erfindungsgemäßen Bohrfutters aus. Im Rahmen der Erfindung ist es jedoch auch vorgesehen, dass die Sperrverzahnung als separates Bauteil bei der Montage der Bohrvorrichtung auf die Bohrspindel gepresst oder auf sonstige Weise drehfest mit der Bohrspindel verbunden wird.

Für die Funktionssicherheit des erfindungsgemäßen Bohrfutters ist es auch günstig, wenn ein elastisches Element zur Überführung der Stellhülse aus der Spannkonfiguration in die Bohrkonfiguration vorgesehen ist. Hierdurch wird insbesondere eine unbeabsichtigte Verstellung der Spannbacken unterbunden, da die Verstellung der Stellhülse aus der Spannkonfiguration in die Bohrkonfiguration stets durch das elastische Element unterstützt wird. Wenn die Bohrspindel eine Sperrverzahnung aufweist, dann bietet das elastische Element zudem den entscheidenden Vorteil, dass bei der Verstellung der Stellhülse aus der Spannkonfiguration in die Bohrkonfiguration im Falle einer Nichtüberlappung der Sperrverzahnung der Bohrspindel und der Verzahnung, die der Stellhülse zugeordnet ist, beim Anlaufen der Bohrspindel die Stellhülse durch das gespannte elastische Element selbsttätigend axial verstellt wird und somit der Maschinenschaft mit der Bohrspindel drehfest verbindet.

Besonders günstig ist es auch, wenn in der Spannkonfiguration zwischen der Stellhülse und dem Maschinengehäuse eine Rutschkupplung vorgesehen ist. Durch die Rutschkupplung lässt sich auf einfache und effektive Art und Weise das Spann- bzw. Lösemoment der Spannbacken begrenzen. Dadurch werden insbesondere zu hohe Spannkräfte vermieden, die zu einer Zerstörung des zu spannenden Werkzeuges durch sehr harte Spannschneiden oder der Spannschneiden selbst führen würden. Weiterhin wird damit auch effektiv verhindert, dass die Spannbacken beim Zurückfahren in dem Backenhalter festgesetzt werden, wodurch unter Umständen ein Spannen nicht mehr möglich und damit die Bohrvorrichtung nicht mehr einsetzbar wäre. In diesem Zusammenhang hat es sich auch als besonders vorteilhaft erwiesen, wenn die Rutschkupplung durch eine radial wirkende Kupplungshülse gebildet ist, die außenumfangsseitig mindestens einen Rastsitz zur Aufnahme eines radial nach außen gegen die Kraft eines Rückstellelements verstellbaren Rastgliedes aufweist. Durch die Rastglieder, die im Rahmen der Erfindung bevorzugt als zylindrische Kupplungsrollen gebildet sind, lässt sich die Rutschkupplung einfach und kostengünstig herstellen, wobei es sich auch bewährt hat, wenn die Anzahl der Rastglieder zur Zahl der Rastsitze korrespondiert.

Im Rahmen der Erfindung hat es sich auch vorteilhaft gezeigt, wenn das Rückstellelement durch einen Federsteg gebildet ist. Dieser Federsteg, der beispielsweise aus Federstahl gebildet sein kann, kann dabei eine Nut zur Aufnahme des Rastgliedes aufweisen. Durch eine geeignete Materialwahl kann insbesondere die Langlebigkeit und die elastische Deformierbarkeit der Rutschkupplung gewährleistet werden. In diesem Zusammenhang hat es sich auch bewährt, wenn zur Erhöhung des Kupplungsmomentes die von dem Rastglied wegweisende Fläche des Federsteges durch Vulkanisat verstärkt ist. Durch das Vulkanisat, das vorteilhafterweise aus Kautschuk gebildet ist, jedoch auch andere Polymere umfasst, lässt sich auf einfache und kostengünstige Art und Weise das Kupplungsmoment der radialen Rutschkupplung erhöhen.

Als besonders günstig hat es sich zudem gezeigt, wenn der Kupplungshülse innenumfangsseitig eine Kupplungsverzahnung zugeordnet ist zur drehfesten Kupplung mit einer der Stellhülse außenumfangsseitig zugeordneten Außenverzahnung. Somit kann die Kupplungshülse auf einfache und effektive Art und Weise mit der Rutschkupplung gekoppelt werden. Im Rahmen der Erfindung ist es jedoch auch vorgesehen, dass die Stellhülse und die Kupplungshülse durch eine andere Art des Formschlusses miteinander verbunden sind. Vorteilhaft ist es auch, wenn die Stellhülse durch einen mit einer vorzugsweise dem Maschinengehäuse zugeordneten Steuerhülse gekoppelten Steuerdraht axial verstellbar ist. Somit kann auf einfache und effektive Art und Weise durch eine Verstellung der Steuerhülse die Stellhülse axial zwischen der Bohrkonfiguration und der Spannkonfiguration verstellt werden. Im Rahmen der Erfindung ist hierbei sowohl eine Verstellung der Steuerhülse in radialer Richtung - also eine Verdrehung - als auch in axialer Richtung oder eine Kombination der vorgenannten Verstellung vorgesehen.

Den Futterkörper integral mit der Bohrspindel zu bilden, bietet den Vorteil, dass auf effektive Art und Weise die Kopflastigkeit der erfindungsgemäßen Bohrvorrichtung reduziert wird und zudem eine äußerst kompakte Bohrvorrichtung realisiert werden kann.

Günstig hat es sich auch gezeigt, wenn das Bohrfutter in einer dem Maschinegehäuse zugeordneten Aufnahme aufgenommen ist und wenn die Außenfläche des Bohrfutters gegenüber der Innenfläche der Aufnahme beabstandet ist. Die Aufnahme dient zum Schutz des Benutzers vor sich drehenden Teilen der Bohrvorrichtung, wobei es im Rahmen der Erfindung vorgesehen ist, dass sich die Aufnahme über die gesamte Länge des Bohrfutters axial erstreckt. In diesem Zusammenhang hat es sich auch als günstig erwiesen, wenn die sich gegenüber dem Maschinengehäuse drehenden Teile des Bohrfutters über die Bohrspindel gelagert sind. Hierdurch lässt sich auf einfache Art und Weise die Bohrvorrichtung mit konventionellen Bohrmaschinen verwenden, ohne dass zunächst aufwendige operative Modifikationen durchgeführt werden müssen.

Im Folgenden wird die Erfindung an in den Zeichnungen dargestellten Ausführungsbeispielen näher erläutert; es zeigen:
- Fig. 1: eine Schnittansicht einer ersten Ausführungsform der erfindungsgemäßen Bohrvorrichtung in der Spannkonfiguration,
- Fig. 2: eine Schnittansicht der Ausführungsform nach Figur 1 in der Bohrkonfiguration,
- Fig. 3: den Schnitt III-III aus Figur 2, und
- Fig. 4: eine weitere Ausführungsform in einer Schnittansicht.

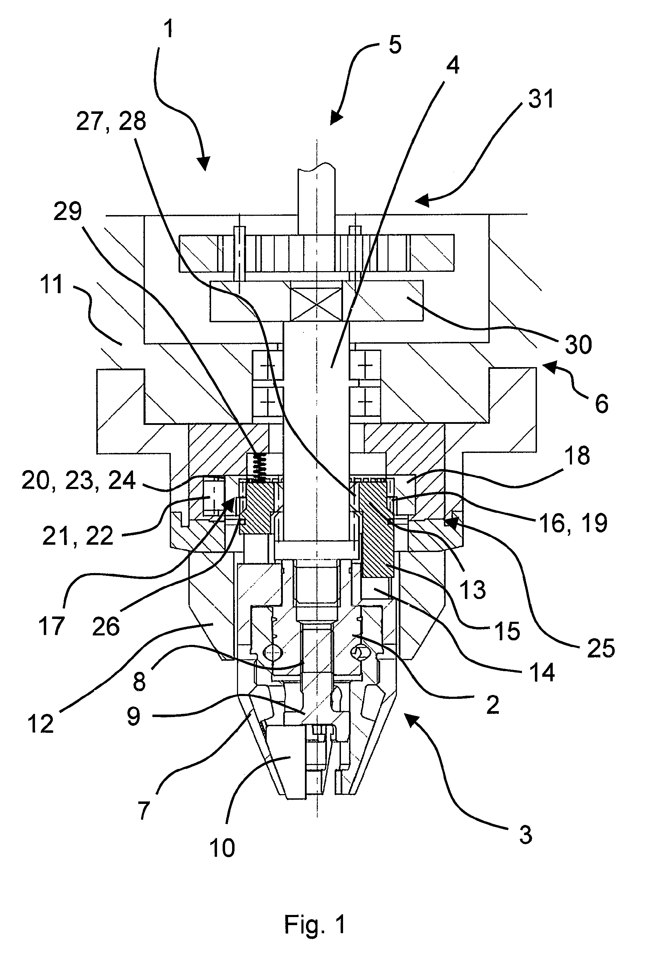

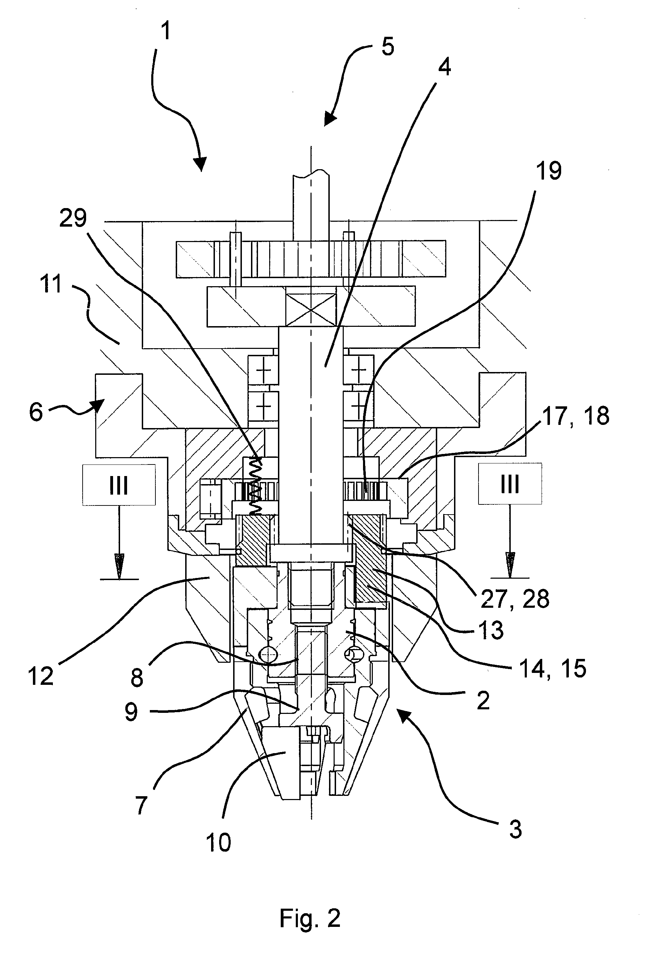

Figur 1 zeigt in einem Längsschnitt eine besonders bevorzugte Ausführungsform einer erfindungsgemäßen Bohrvorrichtung 1 in der Spannkonfiguration mit einem Futterkörper 2, der Teil eines Bohrfutters 3 ist und über eine Bohrspindel 4 mit einem Antrieb 5 einer Bohrmaschine 6 gekoppelt ist. Das Bohrfutter 3 weist weiterhin einen Backenhalter 7 auf, in dem mittels einer Gewindeverbindung 8 zwischen dem Futterkörper 2 und einem Mitnehmer 9 verstellbare Spannbacken 10 gelagert sind. Der Futterkörper 2 ist dabei drehfest mit der Bohrspindel 4 verbunden. Das Bohrfutter 3 ist über die Bohrspindel 4 in einem Maschinengehäuse 11 der Bohrmaschine 6 gelagert und ist in einer dem Maschinengehäuse 11 zugeordneten Aufnahme 12 aufgenommen. Diese dem Schutz des Benutzers dienende Aufnahme 12 ist derartig ausgebildet, dass die Außenfläche des Bohrfutters 3 gegenüber der Innenfläche der Aufnahme 12 beanstandet ist. Dem Backenhalter 7 ist eine drehfest mit diesem verbundene Stellhülse 13 zugeordnet, die zwischen einer Spannkonfiguration, die in der Figur 1 dargestellt ist und einer in der Figur 2 dargestellten Bohrkonfiguration axial verstellbar ist. Um die Stellhülse 13 mit dem Backenhalter 7 drehfest zu koppeln, weist der Backenhalter 7 an der dem Antrieb 5 zuweisenden Stirnseite Ausnehmungen 14 auf, in die Nocken15 eingreifen, die an der Stellhülse 13 ausgebildet sind. In der Spannkonfiguration ist die Stellhülse 13 axial in Richtung des Antriebes 5 verstellt und über eine Außenverzahnung 16 kraftschlüssig drehfest mit einer dem Maschinengehäuse 11 zugeordneten radial wirkenden Rutschkupplung 17 verbunden. Die Rutschkupplung 17 steht über eine innenumfangsseitig an einer Kupplungshülse 18 ausgebildeten Kupplungsverzahnung 19 mit der der Stellhülse 13 außenumfangsseitig zugeordneten Außenverzahnung 16 im Eingriff. Die Kupplungshülse 18 weist außenumfangsseitig mehrere Rastsitze 20 zur Aufnahme jeweils eines radial gegen die Kraft eines als Federsteg 21 gebildetes Rückstellelement 22 verstellbarem Rastglied 23 auf, wobei die Rastglieder 23 in dem gezeigten Ausführungsbeispiel als zylindrische Kupplungsrollen 24 gebildet sind.

Zur Verstellung der Stellhülse 13 zwischen der Spannkonfiguration und der Bohrkonfiguration ist auf bekannte Weise eine dem Maschinengehäuse 11 zugeordnete Steuerhülse 25 vorgesehen, die mit der Stellhülse 13 durch einen Steuerdraht 26 gekoppelt ist, um diese axial zu verstellen. Wird nun in der Spannkonfiguration der Antrieb 5 betätigt, so kommt es zu einer Relativdrehung zwischen der Bohrspindel 4 und dem Backenhalter 7, der über die mit der Rutschkupplung 17 gekoppelten Stellhülse 13 mit dem Maschinengehäuse 11 drehfest verbunden ist. Über den Backenhalter 7, in dem die Spannbacken 10 geführt sind, kommt es somit auch zu einer Relativdrehung zwischen dem Mitnehmer 9 und dem mit der Bohrspindel 4 drehfest verbundenen Futterkörper 2, wodurch der Mitnehmer 9 axial gespindelt wird und sich die in dem Backenhalter 7 geführten Spannbacken 10 ebenfalls axial und zusätzlich radial verstellen. Kommen die Spannbacken 10 beim Spannen zur Anlage an ein zu spannendes, in der Zeichnung nicht dargestelltes Werkzeug, so löst bei einer Überschreitung des durch die Rutschkupplung 17 vorgegebenen Spannmoments die Rutschkupplung 17 aus. Die Kupplungsrollen 24 werden aus den Rastsitzen 20 radial nach außen gegen die Federstege 21 verstellt und geben die Kupplungshülse 18 frei. Über die Kupplungshülse 18 und die damit verbundene Stellhülse 13 wird auch der Backenhalter 7 verdreht. Damit wird ein weitergehendes Spannen der Spannbacken 10 nach Erreichen maximaler Spannkraft unterbunden. Bei einer Veränderung der Laufrichtung des Antriebes 5 - also beim Öffnen der Spannbacken - kommt es ebenfalls nach Erreichen des durch die Rutschkupplung 17 vorgegebenen Lösemoments - wie oben beschrieben - zum Auslösen der Rutschkupplung 17. Über die Kupplungshülse 18 und die damit verbundene Stelihülse 13 wird dabei auch der Backenhalter 7 verdreht. Ein weitergehendes Verstellen der Spannbacken 10 erfolgt somit nach erreichtem maximalem Lösemoment nicht mehr.

An der Bohrspindel 4 ist eine Sperrverzahnung 27 ausgebildet, die zur drehfesten Koppelung der Bohrspindel 4 mit einer der Stellhülse 13 zugeordneten Verzahnung 28 dient, um in der Bohrkonfiguration eine Relativdrehung zwischen dem Backenhalter 7 und der Bohrspindel 4 zu verhindern. In der Spannkonfiguration ist die Stellhülse 13 durch ein elastisches Element 29 beaufschlagt, das in dem gezeigten Ausführungsbeispiel an einem Planetenträger 30 eines dem Antrieb 5 zugeordneten Planetengetriebes 31 abgestützt ist und dazu führt, dass in der Spannkonfiguration auf die Stellhülse 13 stets eine Kraft wirkt, die die Stellhülse 13 axial aus der Spannkonfiguration in die Bohrkonfiguration überführt. Dies ist insbesondere dann von Vorteil, wenn bei einer manuellen Betätigung der Stellhülse 13 die außenumfangsseitig an der Bohrspindel 4 ausgebildete Sperrverzahnung 27 nicht fluchtend mit der Verzahnung 28 der Stellhülse 13 orientiert ist. Beim Anlaufen des Antriebes 5 rutscht die Stellhülse 13 durch das elastische Element 29 in die Sperrverzahnung 27 der Bohrspindel 4 und koppelt damit die Bohrspindel 4 drehfest mit dem Backenhalter 7.

In der in der Figur 2 dargestellten Bohrkonfiguration ist die Stellhülse 13 axial in Richtung der Spannbacken 10 verstellt und greift mit der Verzahnung 28 in die Sperrverzahnung ein 27, die der Bohrspindel 4 außenumfangsseitig zugeordnet ist. Somit ist in der Bohrkonfiguration der Backenhalter 7 mit der Bohrspindel 4 über die Stellhülse 13 drehfest verbunden. Wird nun die Bohrspindel 4 durch den Antrieb 5 angetrieben, so wird der Backenhalter 7 ebenfalls angetrieben. Hierdurch kann keine Relativdrehung zwischen der Bohrspindel 4 und dem Backenhalter 7 erfolgen, wodurch eine Verstellung der Spannbacken 10 ausgeschlossen ist.

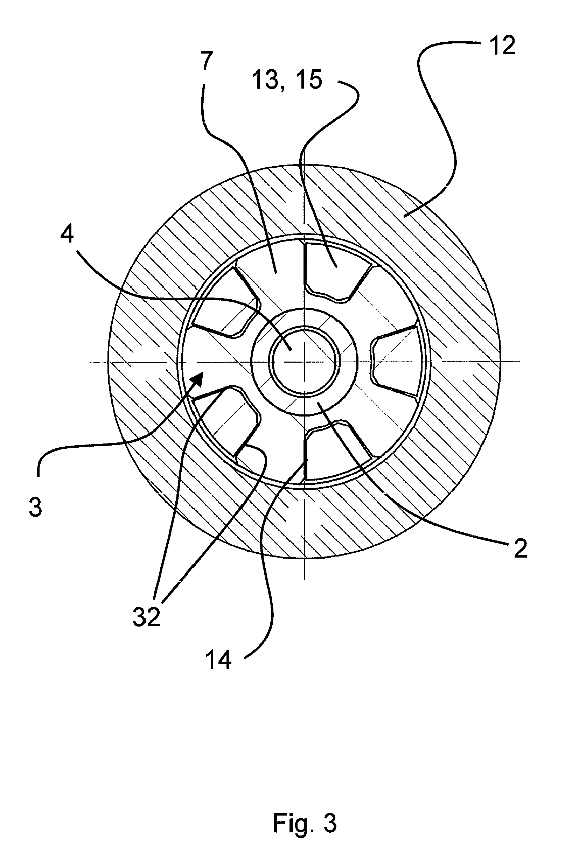

Figur 3 zeigt eine Schnittansicht entlang des Schnittes III-III aus der Figur 2 und verdeutlicht insbesondere die Gestaltung der an dem Backenhalter 7 ausgebildeten Ausnehmungen 14 und der in Form und Anzahl mit diesen Ausnehmungen 14 korrespondierenden Nocken 15, die an der Stellhülse 13 ausgebildet sind und im Eingriff mit den Ausnehmungen 14 stehen, um einen permanenten Formschluss zwischen der Stellhülse 13 und dem Backenhalter 7 zu bilden und dennoch die axiale Verstellbarkeit der Stellhülse 13 relativ zu dem Backenhalter 7 zu ermöglichen. Aus der Figur 3 wird auch ersichtlich, dass Anlageflächen 32, die die Nocken 15 seitlich begrenzen, nicht parallel zueinander orientiert sind, sondern zur Optimierung der Drehmomentübertragung zwischen der Stellhülse 13 und dem Backenhalter 7 zentrisch verlaufen. Auch wird aus der Figur 3 deutlich ersichtlich, dass die Außenfläche des Bohrfutters 3 gegenüber der Innenfläche der Aufnahme 12 radial beabstandet ist.

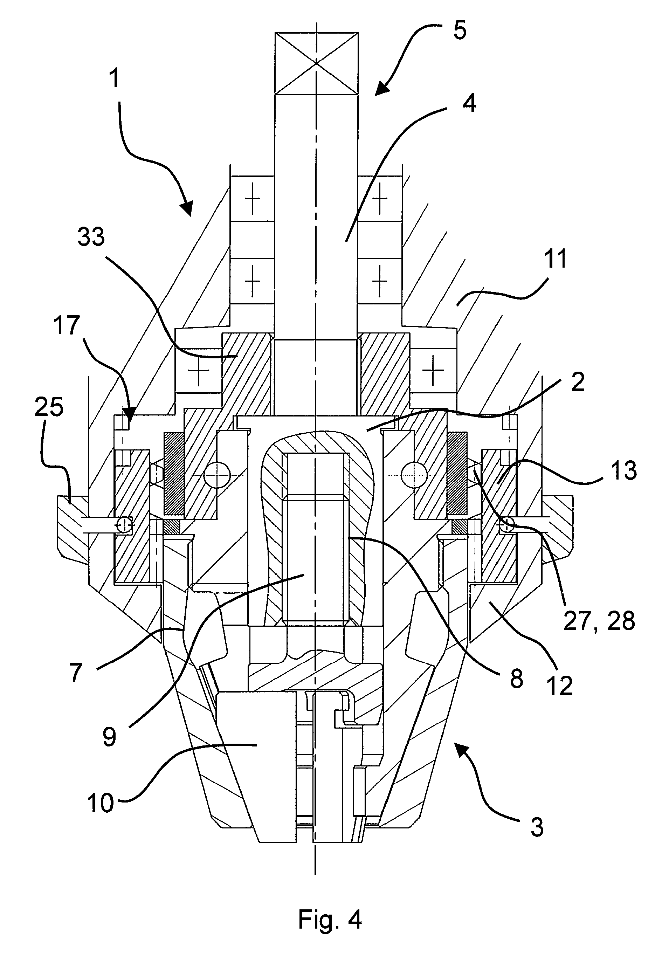

Figur 4 zeigt eine weitere Ausführungsform der erfindungsgemäßen Bohrvorrichtung 1, bei der der Futterkörper 2 integral mit der Bohrspindel 4 gebildet ist. Die Sperrverzahnung 27 ist in dem gezeigten Ausführungsbeispiel einem Übergangsstück 33 zugeordnet, das als separates Bauteil ausgeführt ist und drehfest und axial unverschiebbar mit der Bohrspindel 4 gekoppelt ist. Das die Sperrverzahnung 27 tragende Übergangsstück 33 ist dabei topfartig geformt, um den Backenhalter 7 zwischen der Wandung des Übergangsstücks 33 und der Bohrspindel 4 aufnehmen zu können.

Im Folgenden wird die Funktionsweise der erfindungsgemäßen Bohrvorrichtung 1 noch einmal erläutert. In der Spannkonfiguration, die in der Figuren 1 dargestellt ist, ist die Stellhülse 13 über die radial wirkende Rutschkupplung 17 mit dem Maschinengehäuse 11 verbunden und es kommt bei Betätigung des Antriebes 5 zu einer Relativdrehung zwischen der Bohrspindel 4 und der Stellhülse 13. Durch den aus dem Mitnehmer 9 und dem Futterkörper 2 gebildeten Spindeltrieb können nun - abhängig von der Drehrichtung des Antriebes 5 - die in dem Backenhalter 7 geführten Spannbacken 10 geöffnet oder geschlossen werden. Wird durch eine Betätigung der Steuerhülse 25 die Stellhülse 13 durch den Steuerdraht 26 axial verstellt und aus dem Eingriff mit der radialen Rutschkupplung 17 gebracht, so kann die Stellhülse 13 nun über den Verzahnungseingriff zwischen der Verzahnung 28 und der Sperrverzahnung 27 im Eingriff mit der Bohrspindel 4 gebracht werden. Die Bohrvorrichtung 1 befindet sich nun in der in der Figur 2 dargestellten Bohrkonfiguration. Durch die Kopplung von Backenhalter 7 und Bohrspindel 4 wird eine Relativdrehung zwischen diesen Bauteilen unterbunden, wodurch ein unbeabsichtigtes Lösen der Spannbacken 10 ausgeschlossen ist.

### Bezugszeichenliste

- 1: Bohrvorrichtung
- 2: Futterkörper
- 3: Bohrfutter
- 4: Bohrspindel
- 5: Antrieb
- 6: Bohrmaschine
- 7: Backenhalter
- 8: Gewindeverbindung
- 9: Mitnehmer
- 10: Spannbacken
- 11: Maschinengehäuse
- 12: Aufnahme
- 13: Stellhülse
- 14: Ausnehmung
- 15: Nocke
- 16: Außenverzahnung
- 17: Rutschkupplung
- 18: Kupplungshülse
- 19: Kupplungsverzahnung
- 20: Rastsitz
- 21: Federsteg
- 22: Rückstellelement
- 23: Rastglied
- 24: Kupplungsrolle
- 25: Steuerhülse
- 26: Steuerdraht
- 27: Sperrverzahnung
- 28: Verzahnung
- 29: elastisches Element
- 30: Planetenträger
- 31: Planetengetriebe
- 32: Anlagefläche
- 33: Übergangsstück

## Patentansprüche

1. Bohrvorrichtung, bestehend aus einer ein Maschinengehäuse (11), eine Bohrspindel (4) und einen mit der Bohrspindel (4) gekoppelten Antrieb (5) aufweisenden Bohrmaschine (6) sowie aus einem Bohrfutter (3), dem ein Spannbacken (10) führender Backenhalter (7) sowie ein mit der Bohrspindel (4) verbundener und über eine Gewindeverbindung (8) mit einem die Spannbacken (10) verstellenden Mitnehmer (9) verbundener Futterkörper (2) zugeordnet ist, **dadurch gekennzeichnet, dass** eine permanent drehfest mit dem Backenhalter (7) des Bohrfutters (3) verbundene Stellhülse (13) vorgesehen ist, die zwischen einer die Verstellung der Spannbacken (10) ermöglichenden Spannkonfiguration, in der die Stellhülse (13) drehfest mit dem Maschinengehäuse (11) verbunden ist, und einer Bohrkonfiguration axial verstellbar ist, in der die Bohrspindel (4) drehfest mit dem Backenhalter (7) gekoppelt ist.

2. Bohrvorrichtung nach Anspruch 1, **dadurch gekennzeichnet, dass** an der dem Antrieb (5) zuweisenden Stirnseite des Backenhalters (7) mindestens eine Ausnehmung (14) ausgeformt ist zur konfigurationsunabhängigen Bildung eines Formschlusses mit mindestens einer stirnseitig an der Stellhülse (13) ausgebildeten, in Form und Anzahl mit der mindestens einen Ausnehmung (14) korrespondierenden Nocke (15).

3. Bohrvorrichtung nach Anspruch 2, **dadurch gekennzeichnet, dass** Anlageflächen (32), die die mindestens eine an der Stellhülse (13) ausgebildete Nocke (15) seitlich begrenzen, nicht parallel zueinander orientiert sind.

4. Bohrvorrichtung nach einem der Ansprüche 1 bis 3, **dadurch gekennzeichnet, dass** der Bohrspindel (4) außenumfangsseitig eine Sperrverzahnung (27) zugeordnet ist zur Bildung eines Formschlusses in der Bohrkonfiguration mit einer der Stellhülse (13) innenumfangsseitig zugeordneten Verzahnung (28).

5. Bohrvorrichtung nach einem der Ansprüche 1 bis 4, **dadurch gekennzeichnet, dass** ein elastisches Element (29) zur Überführung der Stellhülse (13) aus der Spannkonfiguration in die Bohrkonfiguration vorgesehen ist.

6. Bohrvorrichtung nach einem der Ansprüche 1 bis 5, **dadurch gekennzeichnet, dass** in der Spannkonfiguration zwischen der Stellhülse (13) und dem Maschinengehäuse (11) eine Rutschkupplung (17) vorgesehen ist.

7. Bohrvorrichtung nach Anspruch 6, **dadurch gekennzeichnet, dass** die Rutschkupplung (17) durch eine radial wirkende Kupplungshülse (18) gebildet ist, die außenumfangsseitig mindestens einen Rastsitz (20) zur Aufnahme eines radial nach außen gegen die Kraft eines Rückstellelements (22) verstellbaren Rastgliedes (23) aufweist.

8. Bohrvorrichtung nach Anspruch 7, **dadurch gekennzeichnet, dass** das Rückstellelement (22) durch einen Federsteg (21) gebildet ist.

9. Bohrvorrichtung nach Anspruch 7 oder 8, **dadurch gekennzeichnet, dass** zur Erhöhung des Kupplungsmoments die von dem Rastglied (23) wegweisende Fläche des Federsteges (21) durch ein Vulkanisat verstärkt ist.

10. Bohrvorrichtung nach einem der Ansprüche 7 bis 9, **dadurch gekennzeichnet, dass** der Kupplungshülse (18) innenumfangsseitig eine Kupplungsverzahnung (19) zugeordnet ist zur drehfesten Kupplung mit einer der Stellhülse (13) außenumfangsseitig zugeordneten Außenverzahnung (16).

11. Bohrvorrichtung nach einem der Ansprüche 1 bis 10, **dadurch gekennzeichnet, dass** die Stellhülse (13) durch einen mit einer dem Maschinengehäuse (11) zugeordneten Steuerhülse (25) gekoppelten Steuerdraht (26) axial verstellbar ist.

12. Bohrvorrichtung nach einem der Ansprüche 1 bis 11, **dadurch gekennzeichnet, dass** der Futterkörper (2) integral mit der Bohrspindel (4) gebildet ist.

13. Bohrvorrichtung nach einem der Ansprüche 1 bis 12, **dadurch gekennzeichnet, dass** das Bohrfutter (3) in einer dem Maschinengehäuse (11) zugeordneten Aufnahme (12) aufgenommen ist, und dass die Außenfläche des Bohrfutters (3) gegenüber der Innenfläche der Aufnahme (12) beabstandet ist.

14. Bohrvorrichtung nach einem der Ansprüche 1 bis 13, **dadurch gekennzeichnet, dass** die sich gegenüber dem Maschinengehäuse (11) drehenden Teile des Bohrfutters (3) über die Bohrspindel (4) gelagert sind.
